(19) Europäisches Patentamt
European Patent Office
Office européen des brevets

(11) **EP 2 064 538 B1**

(12) **FASCICULE DE BREVET EUROPEEN**

(45) Date de publication et mention
de la délivrance du brevet:
**18.06.2014 Bulletin 2014/25**

(21) Numéro de dépôt: **07788047.4**

(22) Date de dépôt: **30.07.2007**

(51) Int Cl.:
***G01N 27/90*** *(2006.01)*

(86) Numéro de dépôt international:
**PCT/EP2007/057847**

(87) Numéro de publication internationale:
**WO 2008/015195 (07.02.2008 Gazette 2008/06)**

(54) **DISPOSITIF DE CONTROLE PAR COURANTS DE FOUCAULT A FONCTIONS EMISSION/ RECEPTION SEPAREES D'UNE PIECE ELECTRIQUEMENT CONDUCTRICE**

VORRICHTUNG ZUR ÜBERPRÜFUNG EINES ELEKTRISCH LEITENDEN TEILS  UNTER VERWENDUNG VON WIRBELSTRÖMEN MIT GETRENNTEN ABGABE-/AUFNAHMEFUNKTIONEN

DEVICE FOR CHECKING USING EDDY CURRENTS WITH SEPARATE EMISSION/RECEPTION FUNCTIONS AN ELECTRICALLY CONDUCTING PART

(84) Etats contractants désignés:
**AT BE BG CH CY CZ DE DK EE ES FI FR GB GR HU IE IS IT LI LT LU LV MC MT NL PL PT RO SE SI SK TR**

(30) Priorité: **03.08.2006  FR 0653275**

(43) Date de publication de la demande:
**03.06.2009  Bulletin 2009/23**

(73) Titulaire: **Commissariat à l'Énergie Atomique et aux Énergies Alternatives**
**75015 Paris (FR)**

(72) Inventeur: **DECITRE, Jean-Marc**
**91460 Marcoussis (FR)**

(74) Mandataire: **Ilgart, Jean-Christophe et al**
**BREVALEX**
**95 rue d'Amsterdam**
**75378 Paris Cedex 8 (FR)**

(56) Documents cités:
EP-A- 0 228 177    FR-A- 2 424 515
US-A- 5 047 719    US-A- 5 182 513
US-A- 5 659 248    US-A1- 2004 178 790

**Description**

**DOMAINE TECHNIQUE**

L'invention concerne un dispositif de contrôle par courants de Foucault à fonctions émission/réception séparées d'une pièce électriquement conductrice.

**ÉTAT DE LA TECHNIQUE ANTÉRIEURE**

Le domaine de l'invention est celui du contrôle par courants de Foucault à fonctions émission/réception séparées d'une pièce électriquement conductrice, présentant une grande dynamique de fonctionnement et utilisant un ensemble de bobinages d'émission et de réception très compact. Un tel contrôle est particulièrement avantageux pour la détection de défauts de petite taille, notamment pour le contrôle non destructif (CND) de pièces électriquement conductrices.

Le principe de la détection de défauts par courants de Foucault dans une pièce électriquement conductrice consiste à émettre au voisinage de cette pièce, à l'aide d'au moins un bobinage d'émission, un champ électromagnétique de fréquence adaptée à la conductivité du matériau et à la profondeur des défauts recherchés. On mesure alors, aux bornes d'au moins un bobinage de réception, une force électromotrice due au couplage direct des lignes de champ magnétique entre le bobinage d'émission et le bobinage de réception en présence de la pièce conductrice. On mesure également une petite variation de cette force électromotrice qui se superpose à celle-ci lors de la présence d'un défaut dans le matériau. Le domaine de l'invention se limite ainsi aux dispositifs utilisant au moins un bobinage affecté à l'émission du signal électromagnétique apte à générer des courants de Foucault dans la pièce à contrôler, et au moins un bobinage affecté à la réception des signaux induits par les courants de Foucäult, une telle configuration étant dite « à fonctions séparées ».

La force électromotrice induite $V_R$ aux bornes de chaque bobinage de réception, qui est à la même fréquence que le courant envoyé dans le bobinage d'émission associé, permet d'obtenir le signal utile après une démodulation. En présence d'un défaut, cette force électromotrice induite $V_R$ devient $V_R \pm \delta V_R$, seule la variation $\delta V_R$, très faible devant $V_R$, étant porteuse d'information. En pratique, plus la tension $V_R$ est faible devant $\delta V_R$, plus l'amplification du signal sera efficace et plus le rapport signal à bruit de la mesure sera meilleur.

Afin de limiter le temps d'inspection des surfaces des pièces et de minimiser les coûts engendrés par l'achat d'un ou plusieurs bancs mécaniques à un ou plusieurs axes nécessitant souvent une grande précision, on peut disposer une multitude d'éléments régulièrement espacés sur un même support. On obtient une barrette (éventuellement avec une disposition des éléments sur plusieurs lignes, en quinconce, si l'on souhaite obtenir un pas de balayage inférieur à la dimension de l'élément) ne nécessitant qu'un déplacement mécanique sur un seul axe. On peut même créer des matrices d'éléments afin d'obtenir une image directe de la zone à contrôler et ainsi supprimer les déplacements mécaniques de précision lent et coûteux. Dans le but d'exploiter au mieux les réponses des différents éléments, on a intérêt à obtenir, en l'absence de défauts, des configurations qui présentent des tensions les plus proches possibles aux bornes des différentes voies réceptrices afin de faciliter l'équilibrage du dispositif de contrôle par courants de Foucault assurant les démodulations des voies.

Mais, l'utilisation de nombreux éléments pose un problème de connectique. Une solution de l'art connu, proposée dans le document référencé [1] en fin de description, décrit une méthode qui consiste, pour des éléments de type émetteur/récepteur séparés disposés en matrice, à mettre en série les lignes de bobinages d'émission d'une part et les colonnes de bobinages de réception d'autre part. Un tel arrangement permet de réduire le nombre de connexion, et les spires créées par les fils de connexions, tout en ayant la possibilité d'interroger tous les éléments. Néanmoins, pour la détection de défauts de petites dimensions, il est nécessaire de disposer les éléments très proches les uns des autres, de sorte que, quelle que soit la position du défaut dans la zone à inspecter, il soit détecté par au moins un élément lors de l'acquisition. Aussi, les bobinages d'émission étant en série sur une même ligne, les bobinages d'émission voisins d'un élément donné vont-ils perturber cet élément. Aux bornes du bobinage de réception dudit élément considéré, vont s'ajouter :

-    La fem (force électro-motrice) induite provenant de l'émetteur associé : VR (mutuelle de l'élément) et $\delta V_R$ (signal utile)
-    Les fem induites par tous les champs magnétiques rayonnés par les bobinages d'émission voisins actifs (c'est-à-dire parcouru par un courant et à la même fréquence). En pratique, le champ électromagnétique décroît avec la distance et seuls les un ou deux éléments voisins auront une influence sur la bobine réceptrice considérée.

Ainsi, les bobinages de réception étant en série, l'alimentation simultanée de plusieurs lignes de bobinages d'émission ne permet pas de retrouver l'information propre détectée par chacun des éléments et nécessite donc l'utilisation d'un multiplexeur pour connecter la source de courant ou de tension successivement à chacune des lignes de bobinages d'émission.

De plus, dans le cas où il n'est pas possible d'éloigner suffisamment les éléments les uns des autres sur une même ligne, un couplage (ou diaphonie entre éléments) tend à augmenter la tension aux bornes des bobinages de réception, ce qui est préjudiciable à l'exploitation du signal utile $\delta V_R$. De plus, cette tension induite en l'absence de défauts par les différents bobinages d'émission voisins peut être différente d'une ligne de bobinages de réception à l'autre.

L'invention a pour objet de pallier de tels inconvénients en proposant un dispositif de contrôle par courants de Foucault à fonctions émission/réception séparées d'une pièce électriquement conductrice permettant d'évaluer la réponse d'une multitude d'éléments simultanément et indépendamment les uns des autres.

## EXPOSÉ DE L'INVENTION

L'invention concerne un dispositif de contrôle par courants de Foucault à fonctions émission/réception séparées d'une pièce électriquement conductrice comprenant plusieurs lignes d'émission constituées de bobinages d'émission, et plusieurs colonnes de réception constituées chacune de bobinages de réception connectés en série en au moins une série, caractérisé en ce que les bobinages d'émission associés aux bobinages de réception d'une série sont tous alimentés par des courants à des fréquences différentes.

Dans une première configuration, les bobinages d'émission sur une même ligne sont parcourus par un courant de même fréquence. Avantageusement, deux bobinages d'émission sur une même ligne d'émission, espacés d'un bobinage d'émission, ont des sens d'enroulement opposés. Les bobinages de réception peuvent avoir tous le même sens d'enroulement ou être tels que sur chaque colonne de réception deux bobinages de réception, espacés d'un bobinage de réception, ont des sens d'enroulement opposés. Avantageusement, des bobinages d'émission supplémentaires peuvent être disposés aux deux extrémités de chaque ligne d'émission.

Dans une seconde configuration, sur chaque ligne d'émission, les bobinages d'émission de rang pair et les bobinages d'émission de rang impair sont alimentés respectivement par des courants de fréquences différentes, et, sur chaque colonne de réception, les bobinages de réception sont disposés entre deux bobinages d'émission voisins d'une même ligne d'émission. Avantageusement, sur chaque ligne d'émission au moins une colonne supplémentaire de bobinages de réception en série, est disposée en bout de ligne d'émission.

Avantageusement, dans ces deux configurations, les lignes d'émission et les colonnes de réception sont disposées de part et d'autre d'un support.

Pour ces deux configurations, le dispositif de l'invention peut avantageusement comporter :

- des amplificateurs disposés chacun en entrée d'une des lignes d'émission,
- un ou plusieurs connecteur(s), par exemple à force d'insertion nulle,
- des préamplificateurs disposés chacun en sortie d'une des colonnes de réception,
- un système de multiplexage pour la partie réception.

On peut également avoir :

- des bobinages d'émission de deux lignes consécutives ayant des sens d'enroulement opposés ;
- des bobinages de réception de deux colonnes consécutives ayant des sens d'enroulements opposés ;
- des colonnes de bobinages de réception câblés en différentiel ;
- des fréquences d'excitation qui sont chacune une somme de plusieurs fréquences.

## BRÈVE DESCRIPTION DES DESSINS

Les figures 1A à 1E illustrent une première configuration multi-éléments du dispositif de l'invention, dans une vue de dessus.

Les figures 2A à 2D illustrent une seconde configuration multi-éléments du dispositif de l'invention, dans une vue de dessus.

La figure 3 illustre l'évolution du module de la tension obtenue aux bornes d'un bobinage de réception en fonction de la distance entre le bobinage de réception et un bobinage d'émission.

## EXPOSÉ DÉTAILLÉ DE MODES DE RÉALISATION PARTICULIERS

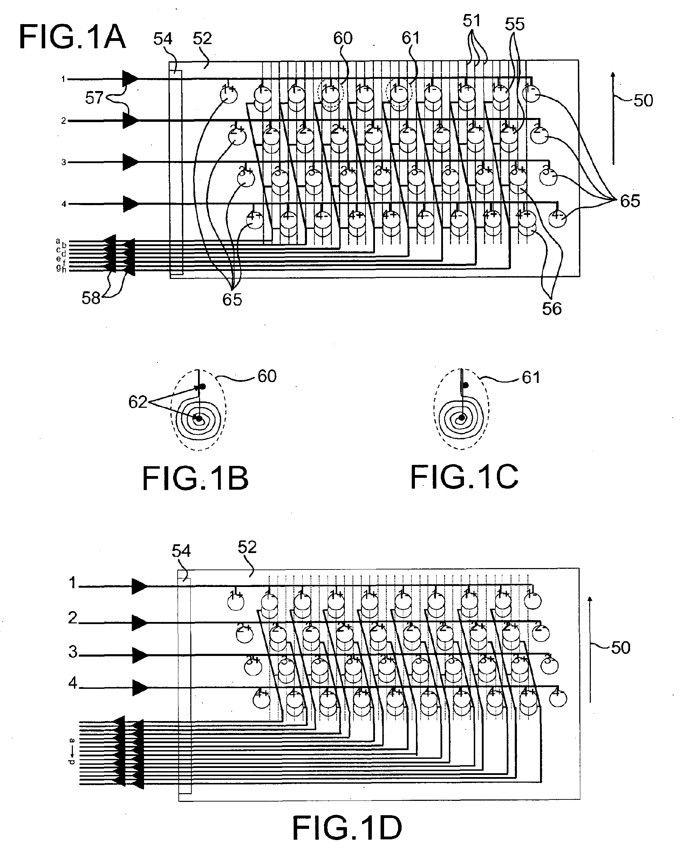

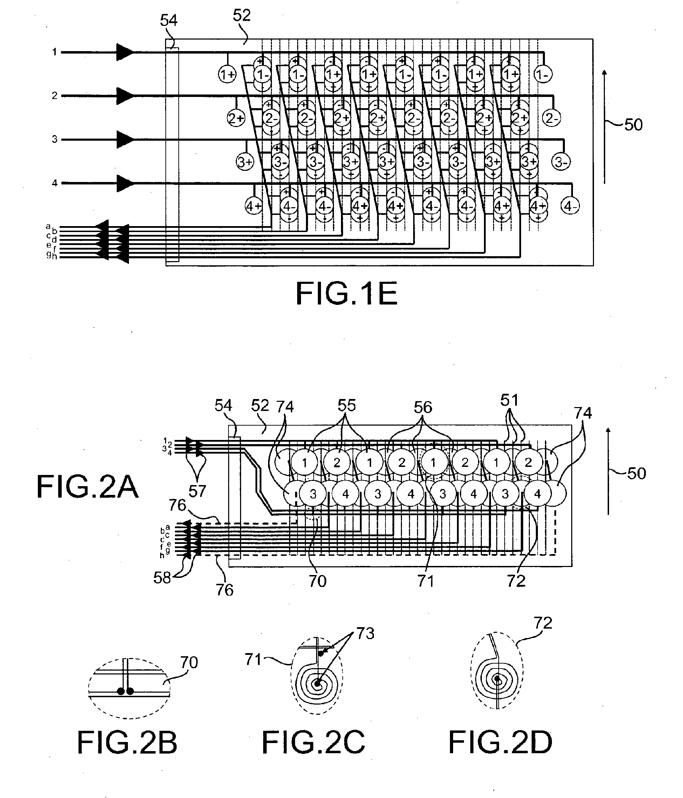

Comme illustré sur les figures 1A et 2A, le dispositif de l'invention est un dispositif de contrôle par courants de Foucault à fonctions émission/réception séparées d'une pièce électriquement conductrice comprenant plusieurs lignes d'émission 1-4 constituées de bobinages d'émission 55, et plusieurs colonnes a-h constituées de bobinages de réception 56 connectés en série entre eux sur une même colonne en au moins une série, dans lequel les bobinages d'émission associés aux bobinages de réception d'une même série sur une même colonne sont tous alimentés par des courants à des fréquences différentes f1, f2, f3, f4.

Le dispositif de l'invention est donc une configuration multi-éléments permettant de réaliser une étape de démodulation spécifique aux techniques des courants de Foucault de manière parallèle, simultanée pour chacun des éléments et indépendamment des éléments voisins.

Comme illustré sur les figures 1A et 2A, le dispositif de l'invention comprend un élément dupliqué sous forme de « barrette multilignes ». On entend par « élément » l'ensemble constitué d'un bobinage d'émission 55 et d'un bobinage de réception 56.

Pour une configuration matricielle régulière ne nécessitant pas de déplacement mécanique, les mêmes types de disposition sont déclinés avec un placement des éléments en pavage carré ou triangulaire.

L'invention permet, d'une part, d'interroger chacune des lignes indépendamment en utilisant des fréquences de travail distinctes. Elle permet, d'autre part, grâce à des sens d'enroulement des bobinages d'émission et de réception bien définis de limiter le couplage entre les éléments d'une même ligne et même d'obtenir avantageusement une même valeur de couplage quelle que soit la colonne.

Première configuration

Une première configuration du dispositif de l'invention, illustrée sur la figure 1A, comprend quatre lignes de huit éléments distincts, représentés avec un recouvrement des bobinages d'émission 55 et de réception 56. La flèche 50 donne la direction de déplacement du dispositif de l'invention. Tous les éléments sont équidistants d'un pas p selon la direction perpendiculaire au déplacement 50. En déplaçant le support 52 selon la direction 50, le dispositif acquiert des points de mesure espacés de ce pas p. Les lignes verticales 51 matérialisent la réponse des éléments lors du déplacement du dispositif. Avantageusement, les pistes de connection correspondant respectivement aux bobinages d'émission et aux bobinages de réception peuvent être disposées de part et d'autre du support 52.

Dans cette première configuration, les bobinages d'émission 55 sont mis en série pour chacune des lignes numérotées 1 à 4. Les bobinages de réception 56 sont mis en série pour chacune des colonnes numérotées a à h. Les bobinages 55 et 56, qui peuvent être disposés de part et d'autre d'un support 52, forment des éléments numérotés (i, j) i étant le numéro de ligne allant de 1 à 4 et j. le numéro de colonne allant de a à h.

Les triangles 57 et 58 représentent des amplificateurs électroniques, à savoir quatre amplificateurs 57 sur les lignes d'émission 1 à 4 et huit préamplificateurs de réception 58, avantageusement faible bruit, sur les colonnes de réception a à h. Un connecteur 54, simple ou double face, peut être disposé sur le support 52 afin de permettre une liaison entre les pistes de connexion sur le support et l'électronique de traitement (amplifications, multiplexage, démodulation, ...). Les amplificateurs et éventuellement des multiplexeurs ou démultiplexeurs peuvent être disposés sur l'une et/ou l'autre des faces du support 52.

Dans cette première configuration, on choisit autant de fréquences distinctes qu'il y a de bobinages de réception en série sur une colonne (quatre fréquences notées f1 à f4 dans l'exemple). Les signaux issus des quatre éléments vont s'ajouter à des fréquences distinctes. Ainsi, sur chacune des huit voies de réception, quatre démodulations (simultanées, éventuellement séquentiellement) à ces quatre mêmes fréquences f1 à f4 permettent d'en déduire les réponses indépendantes des quatre éléments de la colonne. Les fréquences f1 à f4 sont généralement choisies assez voisines afin que les réponses de l'élément (VR et δVR) soient identiques à ces fréquences. On peut également travailler à plusieurs fréquences simultanées.

Pour une application donnée impliquant de petits défauts débouchant en surface, on peut travailler par exemple avec une fréquence de 10MHz. Dans le cas de la configuration considérée ci-dessus, on peut choisir par exemple f1 = 9,8MHz, f2=9,9MHz, f3=10,0MHz et f4 =10,1MHz.

Dans cette première configuration, une éventuelle diaphonie entre bobinages sur une même ligne est également corrigée en choisissant des sens d'enroulements des bobinages bien définis. Un bobinage de réception, par exemple le bobinage de réception du élément (2, c), voit s'annuler les effets des bobinages d'émission des deux éléments situés immédiatement à droite et à gauche sur la même ligne (bobinages d'émission des éléments (2, b) et (2, d)), en choisissant un sens contraire d'enroulement de ces deux bobinages d'émission. Les champs magnétiques créés par les bobinages d'émission voisins immédiats de ce bobinage de réception, étant de même amplitude mais de sens opposé, s'annulent au niveau du bobinage de réception (tous les bobinages de réception sont par exemple bobinés dans le même sens). Les figures 1B (sens +) et 1C (sens -) donnent les sens d'enroulement des bobinages d'émission situé en 60 et 61, les points 62 illustrant des trous métallisés. Ainsi, tous les éléments sont, sur chaque ligne, situés entre deux éléments ayant, l'un, un enroulement du bobinage d'émission de sens + et, l'autre, un enroulement du bobinage d'émission de sens -. Afin d'éviter d'éventuels effets de bord et d'obtenir la même tension quelle que soit la colonne de bobinages de réception considérée (ce qui facilite la phase d'équilibrage de l'appareil courants de Foucault), on peut ajouter des bobinages d'émission supplémentaires 65 aux deux extrémités de chaque ligne 1, 2, 3 et 4, bobinés dans le sens contraire du bobinage d'émission voisin situé sur la même ligne.

Dans un exemple de réalisation avantageux, on considère un élément constitué d'un bobinage d'émission 55 et d'un bobinage de réception 56 gravés sur un film kapton de $50\mu m$ d'épaisseur, les deux bobinages ayant tout deux 1mm de diamètre externe et $500\mu m$ de diamètre interne et 6 spires. Le bobinage d'émission est alimenté par un courant de 20mA avec quatre fréquences très voisines de 10MHz. La distance d entre les deux bobinages d'un même élément est choisie égale à $730\mu m$ dans le but de minimiser la mutuelle et maximiser la réponse due à un défaut de dimensions typiques à détecter, fixées dans cet exemple à $400\mu m$ de longueur, $200\mu m$ de largeur et $200\mu m$ de profondeur. La valeur choisie pour d, obtenue par simulation ou expérimentalement, conduit à un recouvrement des bobinages.

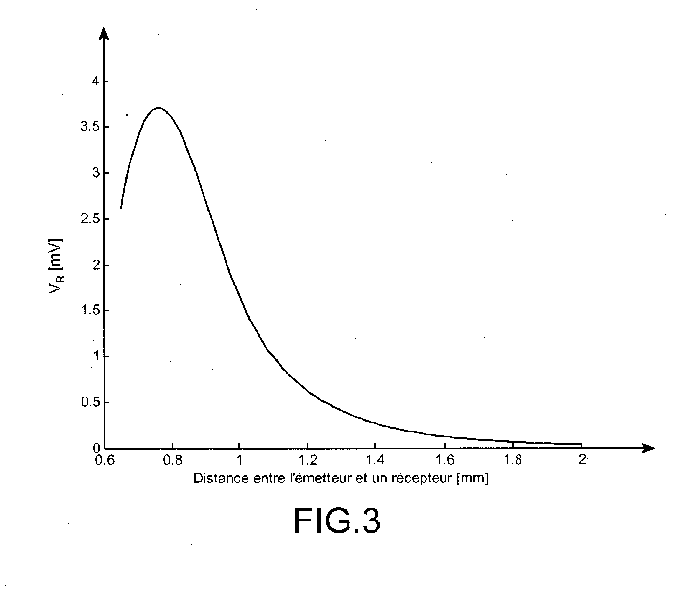

La figure 3 présente l'évolution de la mutuelle VR obtenue aux bornes d'un bobinage de réception en fonction de la distance séparant un bobinage d'émission et un bobinage de réception de deux éléments distincts. Pour la distance optimisée de $d=730\mu m$, la mutuelle VR au sein d'un élément vaut 3,26mV. Si l'on souhaite obtenir une mutuelle entre deux éléments de 20 dB inférieure à 3,26mV (soit $326\mu V$), il faut positionner deux éléments voisins (sur une même ligne ou une même colonne) de telle sorte que le bobinage de réception de l'un des éléments soit distant de $d_{ER}=1,65$mm du bobinage d'émission de l'autre élément. On en déduit que la distance entre deux éléments voisins sur une même ligne doit être de $\sqrt{(d_{ER}{}^2 - d^2)} = 1,48$mm minimum.

Dans le cas de fréquences f1 à f4 proches, on peut considérer les bobinages d'émission et/ou les bobinages de réception de deux lignes consécutives avec des sens d'enroulement opposés. Ceci permet d'annuler entre eux, du moins partiellement, les couplages VR de chacun des éléments plutôt que de les additionner.

• *Première variante de réalisation*

Dans l'exemple ci-dessus, le nombre de lignes d'éléments est fixé à 4, si bien que les lignes doivent être espacées de $\sqrt{(d_{ER}{}^2 - d^2)} = 1,61$mm, le pas p valant 350$\mu$m dans le but de limiter le couplage entre les éléments d'une même colonne. L'encombrement du dispositif selon l'axe de déplacement 50 est égal à $(2 \times r_{ext}+4 \times d+3 \times 1,61) = 8,75$mm ($r_{ext}$ : rayon externe des bobinages).

Pour pallier ce problème de couplage et réaliser des capteurs moins encombrants et en matrice avec un pas fin, une première variante, présentée sur la figure 1D, consiste à connecter en série un bobinage de réception sur deux dans chacune des colonnes et à utiliser le double de voies réceptrices. Avec les valeurs numériques précédentes, la distance de ce nouvel agencement donne un encombrement de 6,9 mm au lieu de 8,75mm. Afin de limiter le nombre de fréquences d'émission, cette variante peut être utilisé avec uniquement deux fréquences.

• *Deuxième variante de réalisation*

Chaque élément peut avoir des géométries variées : bobinages d'émission et de réception identiques ou non, disposés avec ou sans recouvrement, coaxiaux ou non, le bobinage d'émission ou de réception peut être éventuellement décomposé en deux bobinages distincts connectés en série ou en différentiel. La figure 1E reprend la configuration illustrée sur la figure 1A, chaque bobinage de réception étant, à présent, composé de deux bobinages câblés en différentiel.

Deuxième configuration

Dans une deuxième configuration, illustrée sur la figure 2A, l'axe d'un élément défini par le centre des bobinages d'émission et de réception est orienté à 90° par rapport au déplacement 50 du capteur. les bobinages d'émission sont disposés sur plusieurs lignes, par exemple deux. Les bobinages de réception sont disposés sur les lignes d'émission et intercalés entre deux bobinages d'émission. Les bobinages de réception forment des colonnes et, comme dans la configuration précédente, ceux-ci sont mis en série par colonne en au moins une série.

Ainsi un bobinage de réception est associé aux deux bobinages d'émission voisins (celui situé à droite et celui situé à gauche) de la même ligne. A chacune des colonnes de deux bobinages de réception sont ainsi associés quatre bobinages d'émission. Afin de pouvoir séparer le signal obtenu, on utilise quatre fréquences distinctes pour chacun des bobinages d'émission. Les bobinages d'émission de rang pair et les bobinages d'émission de rang impair d'une même ligne sont alimentés avec des courants de fréquences distinctes f1 et f2. Les colonnes, pour lesquelles les bobinages de réception sont en série, sont alimentées par des courants de fréquences f3 et f4 distinctes de celle des lignes précédentes.

A l'une et/ou l'autre extrémité des lignes, on peut ajouter une colonne de bobinages de réception supplémentaire 74 avec ses connexions (liaison 76).

Tous les bobinages de réception peuvent être disposés sur une même face du support 52 et tous les bobinages d'émission peuvent être disposés sur l'autre face de ce même support.

La figure 2B illustre la mise en série d'un bobinage d'émission en 70. Les figures 2C et 2D illustrent le sens des enroulements respectifs d'un bobinage d'émission 71, avec des trous métallisés 73 et d'un bobinage de réception 72.

Les bobinages d'émission et/ou de réception peuvent n'avoir qu'une seule spire. Dans ce cas les trous métallisés 62, 73 ne sont pas nécessaires. De plus, chacun des bobinages d'émission ou de réception d'un élément peut être composé de plusieurs bobinages connectés en série. Par exemple, un bobinage peut être composé de deux bobinages coaxiaux et gravés en vis-à-vis sur chacune des faces d'un film kapton et connectés en série par l'intermédiaire du trou métallisé, les sens d'enroulement étant tels que les tensions à leurs bornes s'ajoutent. Egalement, par exemple, un bobinage d'émission ou de réception peut être composé de deux bobinages (ou plus) non coaxiaux connectés en différentiel et distants de l'émetteur correspondant d'une distance voisine.

Dans cette deuxième configuration, avec les valeurs de l'exemple considéré précédemment, un bobinage d'émission d'un élément est séparé du bobinage de réception de l'élément suivant travaillant à la même fréquence, de 2,1mm, ce qui donne une diaphonie bien meilleure que 20dB sur une même ligne.

Cette deuxième configuration a, par ailleurs, l'avantage de minimiser le nombre de bobinages sur le support. Le principe peut être étendu à un nombre de lignes plus important. Des configurations différentielles sont également possibles en câblant en différentiel deux colonnes de réception consécutives.

Dans le dispositif de l'invention, dans le cas de fréquences f1 à f4 proches, on peut utiliser des bobinages d'émission ou des bobinages de réception de deux lignes consécutives avec des sens d'enroulement opposés. Ceci permet d'annuler entre eux, du moins en partie, les couplages de chacun des éléments plutôt que de les additionner.

Les lignes de bobinages d'émission peuvent être disposées en série afin que chacun d'eux soit parcouru par un courant identique, ce qui permet de minimiser les écarts de réponse entre les éléments. Mais, dans certains cas, notamment si l'impédance des bobinages d'émission est importante et produit aux bornes de ces bobinages une grande chute de tension, la source électrique (de tension et de courant) risque de ne pas permettre d'alimenter correctement la ligne entière de bobinages d'émission. On peut, alors, disposer tous les bobinages d'émission en parallèle sur une même ligne. Des solutions intermédiaires sont possibles en câblant un petit nombre défini et constant de bobinages d'émission consécutifs en série puis en câblant les ensembles ainsi formés en parallèle.

On peut, également, superposer plusieurs matrices les unes sur les autres afin de diminuer le pas p entre les éléments, en choisissant des fréquences qui n'engendrent pas de couplage entre les éléments de chacune des matrices.

Dans le but de couvrir de grandes surfaces, et pour pouvoir alimenter un grand nombre de bobinages d'émission en série, on peut utiliser plusieurs matrices d'éléments de configurations identiques telles que décrites précédemment. Ces matrices peuvent être indépendantes les unes des autres. Elles peuvent également être câblées de telle sorte à ce que les séries de bobinages d'émission soient câblées en série ou parallèle et les bobinages de réception en série.

En pratique, dans les contrôles par courants de Foucault, on travaille souvent à plusieurs fréquences avec un capteur mono élément. Ces fréquences sont superposées en sommant au moins deux courants ou tensions à des fréquences différentes. On peut donc exploiter cette technique multifréquences dans les configurations présentées ci-dessus. Les lignes 1 à 4 de bobinages d'émission ne sont alors pas alimentées chacune par des courants mono fréquence f1 à f4, mais par une somme de n courants à des fréquences différentes f11 à f1n pour la ligne 1, f21 à f2n pour la ligne 2, etc... La démodulation s'effectue à chacune des fréquences f11, ...f1n, f21, ...f2n.... On peut avoir, par exemple, intérêt à travailler d'une part à 10MHz et d'autre part à 1 MHz afin de pouvoir évaluer la profondeur d'un défaut débouchant en surface. On peut alors choisir : f11 = 9,8MHz, f12 = 0,98MHz, f21 = 9,9MHz, f22 = 0,99MHz, f31 = 10MHz, f32 = 1MHz, f41 = 10,1MHz, f42 = 1,1MHz, ces mêmes fréquences étant choisies comme fréquences de démodulation.

## REFERENCES

[1] US 5 047 719

## Revendications

1. Dispositif de contrôle par courants de Foucault à fonctions émission/réception séparées d'une pièce électriquement conductrice, ce dispositif comprenant plusieurs lignes d'émission (1-4) constituées chacune de bobinages d'émission (55), et plusieurs colonnes de réception (a-h) constituées chacune de bobinages de réception (56) connectés en série en au moins une série, **caractérisé en ce qu'**il comprend des moyens d'alimentation des lignes de bobinages d'émission associés à des bobinages de réception par des courants à des fréquences différentes (f1, f2, f3, f4), de telle sorte que dans les bobinages de réception d'une colonne les signaux s'ajoutent à ces fréquences différentes (f1, f2, f3, f4).

2. Dispositif selon la revendication 1, dans lequel il y a un recouvrement des bobinages d'émission (55) et des bobinages de réception (56).

3. Dispositif selon la revendication 1, dans lequel, sur chaque ligne d'émission, deux bobinages d'émission, espacés d'un bobinage d'émission, ont des sens d'enroulement opposés.

4. Dispositif selon la revendication 1, dans lequel, sur chaque colonne de réception, deux bobinages de réception, espacés d'un bobinage de réception, ont des sens d'enroulement opposés.

5. Dispositif selon la revendication 1, dans lequel, sur chaque colonne de réception, tous les bobinages de réception ont le même sens d'enroulement.

6. Dispositif selon la revendication 1, qui comprend des bobinages d'émission supplémentaires (65) aux deux extrémités de chaque ligne d'émission (1- 4).

7. Dispositif selon la revendication 1, dans lequel, sur chaque colonne de réception, les bobinages de réception sont disposés entre deux bobinages d'émission voisins d'une même ligne d'émission (1-2).

8. Dispositif selon la revendication 7, qui comprend au moins une colonne supplémentaire de bobinages de réception (74) en série, disposée en bout de ligne d'émission.

9. Dispositif selon l'une quelconque des revendications 1 à 8, dans lequel les lignes d'émission et les lignes de réception sont disposées de part et d'autre d'un support (52).

**10.** Dispositif selon l'une quelconque des revendications précédentes, qui comprend des amplificateurs (57) disposés chacun en entrée d'une des lignes d'émission (1-4).

**11.** Dispositif selon l'une quelconque des revendications précédentes, qui comprend des préamplificateurs (58) disposés chacun en sortie d'une des colonnes de réception (a-h).

**12.** Dispositif selon l'une quelconque des revendications précédentes, qui comprend un ou plusieurs connecteur(s).

**13.** Dispositif selon la revendication 12, dans lequel le (ou les) connecteur(s) sont à force d'insertion nulle.

**14.** Dispositif selon l'une quelconque des revendications précédentes, dans lequel les bobinages d'émission de deux lignes consécutives ont des sens d'enroulement opposés.

**15.** Dispositif selon l'une quelconque des revendications précédentes, dans lequel les bobinages de réception de deux colonnes consécutives ont des sens d'enroulement opposés.

**16.** Dispositif selon l'une quelconque des revendications précédentes, dans lequel les colonnes de bobinages de réception sont câblés en différentiel.

**Patentansprüche**

**1.** Einrichtung zum Überprüfen eines elektrisch leitenden Teils durch Wirbelströme mit getrennten Sende/Empfang-Funktionen, wobei die Einrichtung mehrere Sende-Zeilen (1-4) umfasst, die jeweils aus Sende-Wicklungen (55) gebildet sind, und mehrere Empfang-Spalten (a-h) umfasst, die jeweils aus Empfang-Wicklungen (56) gebildet sind, die in wenigstens einer Reihe in Reihe geschaltet sind, **dadurch gekennzeichnet, dass** sie Mittel zur Versorgung der Zeilen der Sende-Wicklungen umfasst, die den Empfang-Wicklungen zugeordnet sind, durch Ströme mit unterschiedlichen Frequenzen (f1, f2, f3, f4), so dass in den Empfang-Wicklungen einer Spalte die Signale mit diesen unterschiedlichen Frequenzen (f1, f2, f3, f4) hinzugefügt werden.

**2.** Einrichtung nach Anspruch 1, wobei eine Überlappung der Sende-Wicklungen (55) und der Empfang-Wicklungen (56) vorliegt.

**3.** Einrichtung nach Anspruch 1, wobei auf jeder Sende-Zeile zwei Sende-Wicklungen, beabstandet um eine Sende-Wicklung, gegenläufige Wicklungsrichtungen aufweisen.

**4.** Einrichtung nach Anspruch 1, wobei auf jeder Empfang-Spalte zwei Empfang-Wicklungen, beabstandet um eine Empfang-Wicklung, gegenläufige Wicklungsrichtungen aufweisen.

**5.** Einrichtung nach Anspruch 1, wobei auf jeder Empfang-Spalte alle Empfang-Wicklungen die gleiche Wicklungsrichtung aufweisen.

**6.** Einrichtung nach Anspruch 1, umfassend zusätzliche Sende-Wicklungen (65) an den zwei Enden jeder Sende-Zeile (1-4).

**7.** Einrichtung nach Anspruch 1, wobei, auf jeder Empfang-Spalte die Empfang-Wicklungen zwischen zwei benachbarten Sende-Wicklungen einer gleichen Sende-Zeile (1-2) angeordnet sind.

**8.** Einrichtung nach Anspruch 7, umfassend wenigstens eine zusätzliche Spalte von Empfang-Wicklungen (74) in Reihe, angeordnet am Ende der Sende-Zeile.

**9.** Einrichtung nach einem der Ansprüche 1 bis 8, wobei die Sende-Zeilen und die Empfang-Zeilen zu beiden Seiten eines Trägers (52) angeordnet sind.

**10.** Einrichtung nach einem der vorhergehenden Ansprüche, umfassend Verstärker (57), die jeweils am Eingang von einer der Sende-Zeilen (1-4) angeordnet sind.

**11.** Einrichtung nach einem der vorhergehenden Ansprüche, umfassend Vorverstärker (58), die jeweils am Ausgang von einer der Empfang-Spalten (a-h) angeordnet sind.

**12.** Einrichtung nach einem der vorhergehenden Ansprüche, umfassend ein oder mehrere Verbindungsstücke.

**13.** Einrichtung nach Anspruch 12, wobei das Verbindungsstück oder die Verbindungsstücke eine Null-Steckkraft aufweist bzw. aufweisen.

**14.** Einrichtung nach einem der vorhergehenden Ansprüche, wobei die Sende-Wicklungen zweier aufeinander folgender Zeilen gegenläufige Wicklungsrichtungen aufweisen

**15.** Einrichtung nach einem der vorhergehenden Ansprüche, wobei die Empfang-Wicklungen zweier aufeinander folgender Spalten gegenläufige Wicklungsrichtungen aufweisen.

**16.** Einrichtung nach einem der vorhergehenden Ansprüche, wobei die Spalten der Empfang-Wicklungen differentiell verschaltet sind.

## Claims

1. Device with separate emission/reception functions for making eddy current tests on an electrically conducting part, this device comprising several emission rows (1-4) each composed of emission windings (55), and several reception columns (a-h) each composed of reception windings (56) connected in series in at least one series, **characterized in that** it comprises power supply means for emission windings associated with reception windings by currents at different frequencies (f1, f2, f3, f4) such that the signals in the reception windings of one column are added at these different frequencies (f1, f2, f3, f4).

2. Device according to claim 1, in which there is an overlap of emission windings (55) and reception windings (56).

3. Device according to claim 1, in which two emission windings separated by one emission winding on each emission row, have opposite winding directions.

4. Device according to claim 1, in which two reception windings separated by one reception winding on each reception column, have opposite winding directions.

5. Device according to claim 1, in which all reception windings on each reception column have the same winding direction.

6. Device according to claim 1, that comprises additional emission windings (65) at the two ends of each emission row (1-4).

7. Device according to claim 1, in which the reception windings on each reception column are arranged between two adjacent emission windings in the same emission row (1-2).

8. Device according to claim 7 that comprises at least one additional column of reception windings (74) arranged in series at the end of the emission row.

9. Device according to anyone of claims 1-8, in which the emission rows and reception rows are arranged on each side of a support (52).

10. Device according to anyone of preceding claims, that comprises amplifiers (57) each arranged at the input to one of the emission rows (1-4).

11. Device according to anyone of preceding claims, that comprises pre-amplifiers (58) each arranged at the output from one of the reception columns (a-h).

12. Device according to anyone of preceding claims, that comprises one or several connector(s).

13. Device according to claim 12, in which the connector(s) require zero insertion force.

14. Device according to anyone of preceding claims, in which emission windings in two consecutive rows have opposite winding directions.

15. Device according to anyone of preceding claims, in which reception windings in two consecutive columns have opposite winding directions.

16. Device according to anyone of preceding claims, in which columns of reception windings are wired in differential.

FIG.1A

FIG.1B

FIG.1C

FIG.1D

FIG.1E

FIG.2A

FIG.2B

FIG.2C

FIG.2D

FIG.3

**RÉFÉRENCES CITÉES DANS LA DESCRIPTION**

**Documents brevets cités dans la description**

- US 5047719 A